# EUROPÄISCHE PATENTANMELDUNG

(11) **EP 4 507 143 A1**
(43) Veröffentlichungstag der Anmeldung: **12.02.2025**
(21) Anmeldenummer: 24193199.7
(22) Anmeldetag: 06.08.2024
(51) Int. Cl.: H02G 3/08, H02G 3/12

(54) **INSTALLATIONSDOSE**

(30) Priorität: 07.08.2023 CH 8482023; 07.08.2023 DE 202023104452 U
(71) Anmelder: Kaiser GmbH & Co. KG, 58579 Schalksmühle (DE)
(72) Erfinder:
(74) Vertreter: Rentsch Partner AG

(57) **Zusammenfassung**

Die vorliegende Erfindung bezieht sich auf eine Installationsdose (1) für elektrotechnische Installationen, die Installationsdose (1) umfassend eine sich in eine axiale Richtung (x) von einem vorderseitigen Ende (3) zu einem rückseitigen Ende (4) erstreckende röhrenförmige Seitenwand (2), welche einen Installationsraum (5) umgibt der durch eine vorderseitige, von der röhrenförmigen Seitenwand (2) berandete Installationsöffnung (6) zugänglich ist. Die Installationsdose umfasst weiter mindestens einen in der röhrenförmigen Seitenwand (2) angeordneten und entlang einer definierten Kontur (7) heraustrennbaren Wandbereich (8). Weiter ist an einer Aussenseite der röhrenförmigen Seitenwand (2) eine Raststruktur (9) zum Wirkverbinden einer Gegenraststruktur (9') einer weiteren Installationsdose (1') aus einer Verbindungsrichtung angeordnet.

## Beschreibung

Die vorliegende Erfindung bezieht sich auf eine Installationsdose für elektrotechnische Installationen.

Aus dem Stand der Technik sind Installationsdosen bekannt, welche dazu ausgelegt sind mit weiteren Installationsdosen wirkverbunden zu werden. Diese Installationsdosen sind vornehmlich aus Hartplastik oder Metall und die Wirkverbindung wird in der Regel über Wirkverbindungsmittel mit Schienen realisiert, entlang denen die Installationsdosen zusammengeschoben werden. D.h. eine Verbindungsrichtung (Richtung aus der die jeweilige Installationsdose auf eine weitere Installationsdose zum Wirkverbinden zubewegt werden muss) ist in Richtung einer Mittelachse, respektive entlang einer Erstreckungsrichtung einer Seitenwand, der jeweiligen Installationsdose. Ein Beispiel derartiger herkömmlicher wirkverbindbarer Installationsdosen ist die AT122684**,** die DE3518109 oder die NL2006687**,** welche jeweils eine Wirkverbindung zweier Installationsdosen mittels schwalbenschwanzartiger Führungsschienen offenbart. Für derartige Verbindungen werden in der Regel zuerst entsprechende Wandbereiche der Dosen herausgetrennt und dann die Dosen ineinandergeschoben.

Ebenfalls bekannt sind Installationsdosen, welche über Verbindungstunnel miteinander wirkverbunden werden können. Die Verbindungstunnel stehen seitlich von der Installationsdose ab, und dienen dazu ineinander gesteckt zu werden. Die vergrösserte Verbindungsfläche entlang der Erstreckungsrichtung der Tunnel verbessert hierbei die Abdichtung der Elemente aus Hartplastik. In diesem Fall steht die Verbindungsrichtung also senkrecht zur Mittelachse der Installationsdose. Beispiele für derartige Installationsdosen ist z.B. die DE10263262 der gleichen Anmelderin. Nachteilig an derartigen Installationsdosen ist jedoch, dass die Tunnel nur eine begrenzte Durchführöffnung bereitstellen und grössere Abstände zwischen den Seitenwänden der jeweiligen Installationsdosen bedingen.

Eine Aufgabe der Erfindung besteht darin eine wirkverbindbare Installationsdose bereitzustellen, welche eine einfache Montage ermöglicht. Eine weitere Aufgabe der Erfindung ist es eine wirkverbindbare Installationsdose mit einer guten Abdichtung bereitzustellen. Eine weitere Aufgabe der Erfindung ist es eine Installationsdose bereitzustellen, welche auf kleinem Raum, d.h. mit geringen Abstand der jeweiligen Installationsdose zueinander, wirkverbindbar ist.

Die vorliegende Erfindung bezieht sich auf eine Installationsdose für elektrotechnische Installationen. Die Installationsdose umfasst hierbei eine sich in eine axiale Richtung, insbesondere von einem vorderseitigen Ende zu einem rückseitigen Ende, erstreckende röhrenförmige Seitenwand. Die röhrenförmige Seitenwand erstreckt um eine Mittelachse der Installationsdose. Die röhrenförmige Seitenwand umgibt einen Installationsraum, welcher über eine vorderseitige, von der röhrenförmigen Seitenwand berandete Installationsöffnung zugänglich ist. Die röhrenförmige Seitenwand kann rund oder eckig sein. Weiterhin kann die röhrenförmige Seitenwand entlang der axialen Richtung den Querschnitt ändern. Das rückseitige Ende der Seitenwand kann ferner eine Montageöffnung umgeben. Alternativ kann die röhrenförmige Seitenwand an dem rückseitigen Ende ebenfalls in einen Dosenboden übergehen. Die Installationsöffnung und/oder die Montageöffnung (wenn vorhanden) können je durch einen Deckel verschliessbar sein, respektive die Installationsdose kann einen Deckel zum Verschliessen der Installationsöffnung und/oder ggf. einen weiteren Deckel zum Verschliessen der Montageöffnung aufweisen.

In der röhrenförmigen Seitenwand kann mindestens ein entlang einer definierten Kontur heraustrennbarer Wandbereich angeordnet sein. Der mindestens eine heraustrennbare Wandbereich kann sich in die axiale Richtung erstrecken. Mit Vorteil sind jedoch zwei heraustrennbare Wandbereiche vorhanden. Diese sind vorzugsweise gegenüberliegend voneinander in Bezug zur Mittelachse der röhrenförmigen Seitenwand angeordnet. Die zwei gegenüberliegend voneinander angeordneten Wandbereiche können hierbei parallel zueinander orientiert sein.

Pro heraustrennbarer Wandbereich ist mit Vorteil je eine Raststruktur vorhanden. Einer jeden Raststruktur kann eine Verbindungsrichtung zugeordnet werden. Die Raststruktur dient zum Wirkverbinden mit einer Gegenraststruktur einer weiteren Installationsdose. Die Raststruktur, respektive die Installationsdose wird hierbei in die Verbindungsrichtung mit der Gegenraststruktur, respektive der weiteren Installationsdose wirkverbunden. Mit Vorteil ist die Raststruktur an einer Aussenseite der röhrenförmigen Seitenwand, insbesondere benachbart zum heraustrennbaren Wandbereich, angeordnet. Die Raststruktur kann jedoch ebenfalls an dem optionalen, die Installationsöffnung und/oder die Montageöffnung verschliessenden Deckel angeordnet sein.

Die Verbindungsrichtung ist hierbei mit Vorzug im Wesentlichen senkrecht zur axialen Richtung angeordnet. Weiterhin ist die Verbindungsrichtung von einer Mittelachse der Installationsdose wegweisend definiert. Die Verbindungsrichtung ist also diejenige Richtung in welche die Installationsdose zum Wirkverbinden der Raststruktur mit der Gegenraststruktur der weiteren (nicht beanspruchte) Installationsdose zubewegt wird. Wenn mehrere heraustrennbare Wandbereiche mit jeweiligen Raststrukturen vorhanden sind, lässt sich folglich pro Raststruktur, respektive pro Wandbereich eine Verbindungsrichtung definieren. Mit Vorteil ist die jeweilige Verbindungsrichtung im Wesentlichen senkrecht (insbesondere senkrecht) zur axialen Richtung angeordnet. Mit im Wesentlichen senkrecht ist gemeint, dass die Verbindungsrichtung in einem Winkel zwischen 85° und 95°, insbesondere 87° - 92°, zu der axialen Richtung angeordnet sein.

Die Raststruktur umfasst hierbei ein erstes und ein zweites Rastelement. Beispielsweise kann das erste Rastelement ein Rasthaken umfassen und/oder das zweite Rastelement zum Verrasten eines entsprechenden (baugleichen weiteren) Rasthakens dienen. Das erste Rastelement weist hierbei eine erste Rastschulter und das zweite Rastelement eine zweite Rastschulter auf. Die erste und/oder die zweite Rastschulter (bzw. eine von den Rastschultern jeweils gebildete Rastfläche) ist mit Vorzug normal zur Verbindungsrichtung und/oder parallel zu einer Aussenseite des heraustrennbaren Wandbereichs angeordnet. Die erste Rastschulter ist mit Vorteil mit einem ersten Abstand A1 in die Verbindungsrichtung zu einer Aussenseite des heraustrennbaren Wandbereichs angeordnet und die zweite Rastschulter mit einem zweiten Abstand A2 in Verbindungsrichtung zu der Aussenseite des heraustrennbaren Wandbereichs angeordnet. Vorteilhafterweise ist dabei eine Summe A des ersten Abstandes A1 und des zweiten Abstandes A2 grösser als null. Insbesondere bietet sich eine Summe A von 0.1 - 3 mm an. Je nach Ausgestaltung der Rastelemente kann der Abstand A1 oder A2 negativ sein. Dies ist der Fall, wenn die erste Rastschulter näher zur Mittelachse der Installationsdose orientiert ist als die Aussenseite des heraustrennbaren Wandbereiches (A1 < 0) oder wenn die zweite Rastschulter näher zur Mittelachse orientiert ist als die Aussenseite des heraustrennbaren Wandbereiches (A2 < 0). Vorteilhafterweise ist jedoch zumindest der Abstand A1 grösser null. Ebenso können beide Abstände A1 und A2 je grösser null sein.

Eine Summe von A von grösser null bewirkt, dass in einem wirkverbundenen Zustand der Installationsdose mit einer weiteren Installationsdose (mit baugleicher Raststruktur und einem heraustrennbaren Wandbereich) zwischen den jeweiligen heraustrennbaren Wandbereichen ein Zwischenraum entsteht. Der Zwischenraum wird also in Verbindungsrichtung von den jeweiligen heraustrennbaren Wandbereichen und senkrecht hierzu (und senkrecht zur axialen Richtung) von den ersten und zweiten Rastelementen begrenzt. Dies hat verschiedene Vorteile. Beispielsweise können so die jeweiligen Wandbereiche erst nach dem Wirkverbinden und/oder erst nach dem Einbau der Installationsdose in einer Wand heraustrennbar sein. Ebenfalls erleichtert der Zwischenraum das nachträgliche Heraustrennen zweier Wandbereiche. Die Doppelwandigkeit (zwei heraustrennbare Wandbereiche nebeneinander) erschwert das Heraustrennen und benötigt mehr Kraft. Der Zwischenraum ermöglicht es z.B. ein Werkzeug zwischen die jeweiligen Wandbereiche der wirkverbundenen Installationsdosen einzubringen. Der Zwischenraum ist ebenfalls von Vorteil um von der Aussenseite des heraustrennbaren Wandbereiches abragende Elemente (wie Positionierelemente, Anzeigeelemente, Greifelemente oder ähnliches) aufzunehmen, ohne dass diese der Wirkverbindung entgegenstehen. Ebenfalls können in dem Zwischenraum weichelastische Elemente angeordnet sein. Diese können sich beim Wirkverbinden deformieren, wobei das deformierte Element in dem Zwischenraum aufgenommen wird. Ein entsprechendes Beispiel ist eine Dichtung oder eine Greiflasche, wie nachstehend beschrieben.

Die Raststruktur kann ein oder mehrere (erste und zweite) Rastelemente umfassen. Die Raststruktur weist mit Vorteil mindestens ein Paar Rastelemente auf. Ein Paar Rastelemente umfasst hierbei ein erstes und ein zweites Rastelement. Das erste und zweite Rastelement eines Paars von Rastelementen ist vorzugsweise in eine Umfangsrichtung der Installationsdose in Bezug zum (entsprechenden) heraustrennbaren Wandbereich gegenüberliegend voneinander angeordnet. Mit Vorteil ist das erste Rastelement dazu ausgelegt mit einem zweiten Rastelement der Gegenraststruktur der weiteren Installationsdose wirkverbunden zu werden, wobei das zweite Rastelement der Gegenraststruktur baugleich zum zweiten Rastelement der Raststruktur ausgestaltet sein kann. Ergänzend kann das zweite Rastelement dazu ausgelegt sein mit einem ersten Rastelement der Gegenraststruktur wirkverbunden zu werden, wobei das erste Rastelement der Gegenraststruktur baugleich zum ersten Rastelement der Raststruktur ausgestaltet sein kann. Dieser Aufbau hat den Vorteil, dass z.B. eine Drehung um 180° der Installationsdose um die Mittelachse bei gegenüberliegenden heraustrennbaren Wandbereichen und Raststrukturen keine Auswirkung auf die Wirkverbindbarkeit mit der weiteren Installationsdose hat. Je nach Ausgestaltung kann das mindestens eine erste Rastelement in eine erste Richtung (y-Richtung), welche senkrecht zur axialen Richtung (x-Richtung) und senkrecht zur Verbindungsrichtung (z-Richtung) angeordnet ist, hinterschnittsfrei ausgestaltet sein. Das mindestens eine zweite Rastelement kann wiederum in eine zur ersten Richtung entgegengesetzt angeordneten zweiten Richtung (negative y-Richtung) hinterschnittsfrei ausgestaltet sein. Dies ist insbesondere von Vorteil bei der Herstellung der Installationsdose durch Spritzguss.

Wie oben beschrieben, kann das erste Rastelement ein Rasthaken sein. Der Rasthaken weist hierbei eine erste Rastschulter auf, welche dazu ausgelegt ist hinter einer zweiten Rastschulter (des zweiten Rastelementes der weiteren wirkverbindbaren Installationsdose) zu verrasten. In einem wirkverbundenen Zustand liegt also die erste Rastschulter zumindest bereichsweise an einer zweiten Rastschulter des zweiten Rastelementes der weiteren wirkverbindbaren Installationsdose an. Ebenso liegt die zweite Rastschulter in einem wirkverbundenen Zustand zumindest bereichsweise an einer ersten Rastschulter des ersten Rastelementes der weiteren wirkverbindbaren Installationsdose an. Zwischen der zweiten Rastschulter und der röhrenförmigen Seitenwand kann ein Aufnahmeraum für einen Bereich eines ersten Rastelementes / eines Rasthakens einer wirkverbindbaren weiteren Installationsdose sein.

Das zweite Rastelement kann L-förmig oder brückenartig ausgebildet sein. Die zweite Rastschulter ist dann z.B. an einer zur Seitenwand hingewandten Unterseite des brückenartigen zweiten Rastelementes angeordnet. Bei mehreren ersten Rastelementen können diese in die axiale Richtung (direkt oder zueinander beanstandet) hintereinander angeordnet sein. Dies gilt ebenfalls für mehrere zweite Rastelemente. Mit Vorteil entspricht die Anzahl der mehreren ersten Rastelemente der Anzahl der mehreren zweiten Rastelemente, oder, in anderen Worten, mit Vorteil sind die ersten und zweiten Rastelemente (nur) paarweise vorhanden.

Für eine einfache Wirkverbindung bietet es sich an, wenn das erste und/oder das zweite Rastelement in eine Richtung senkrecht zur Verbindungsrichtung (und insbesondere ebenfalls senkrecht zur axialen Richtung) elastisch deformierbar ist. Für eine stabile Raststruktur kann hierbei vorgesehen werden, dass insbesondere das zweite Rastelement senkrecht zur Verbindungsrichtung und von dem heraustrennbaren Wandbereich nach aussen weg zum Wirkverbinden deform ierbar ist.

Alternativ oder ergänzend kann das erste Rastelement, insbesondere der Rasthaken, eine distale Auflagefläche zur Auflage an einer röhrenförmigen Seitenwand einer weiteren wirkverbindbaren Installationsdose aufweisen. Die distale Auflagefläche ist hierbei mit Vorzug in Verbindungsrichtung zumindest bereichsweise hinter der ersten Rastschulter angeordnet. Weiterhin kann die distale Auflagefläche zum heraustrennbaren Wandbereich hingewandt am ersten Rastelement angeordnet sein. Die erste Rastschulter kann hingegen vom heraustrennbaren Wandbereich wegweisend am ersten Rastelement angeordnet sein. Dies Anordnung erlaubt eine sichere Verbindung und eine verbesserte Abdichtung. Je nach Ausgestaltung kann das erste Rastelement weiter eine proximale Auflagefläche zur Auflage an einem zweiten Rastelement einer weiteren wirkverbindbaren Installationsdose aufweisen. Die proximale Auflagefläche kann hierbei in Verbindungsrichtung zumindest bereichsweise vor der ersten Rastschulter angeordnet sein. Die proximale Auflagefläche kann weiterhin vom heraustrennbaren Wandbereich weggewandt am ersten Rastelement angeordnet sein.

Je nach Anwendung kann die Installationsdose eine deformierbare Dichtung umfassen, welche zumindest bereichsweise um den mindestens einen heraustrennbaren Wandbereich angeordnet ist. Die Dichtung ist mit Vorteil in dem oben umschriebenen Zwischenraum angeordnet. Weiterhin kann die Dichtung in Umfangsrichtung der Installationsdose zwischen dem ersten und dem zweiten Rastelement angeordnet sein. Ein Nachteil herkömmlicher Wirkverbindungsmittel ist es, dass diese oftmals nicht mehr funktionieren, wenn man eine weichelastische Dichtung für eine bessere Abdichtung vorsieht. Beispielsweise führt bei bekannten Installationsdosen, wo die Verbindungsrichtung in axialer Richtung orientiert ist, die Schubkraft in Verbindungsrichtung beim Zusammenschieben der Installationsdosen zu erhöhten Reibungskräften an der weichelastischen Dichtung, was eine derartige Verbindung massiv erschwert und/oder die Dichtung langfristig beschädigt. Bei der vorliegenden Erfindung ist daher die Dichtung dazu ausgelegt beim Wirkverbinden der Raststruktur mit der Gegenraststruktur der weiteren Installationsdose in eine Verbindungsrichtung komprimiert zu werden und die Installationsdose gegen die weitere wirkverbundene Installationsdose abzudichten. D.h. es wirken keine Schubkräfte auf die weichelastische Dichtung. Die Dichtung kann z.B. einen dreieckigen, halbkreisförmigen und/oder u-förmigen Querschnitt aufweisen. Wenn zwei gegenüberliegende Wandbereiche vorhanden sind, können die um die jeweiligen gegenüberliegenden Wandbereiche umlaufenden Dichtungen unterschiedliche Querschnitte aufweisen. Besonders vorteilhaft ist es, wenn die um die jeweiligen gegenüberliegenden Wandbereiche umlaufenden Dichtungen ineinandergreifende Querschnitte aufweisen. Mit Vorteil grenzt die (jeweilige) Dichtung zumindest bereichsweise um den mindestens einen heraustrennbaren Wandbereich direkt an. Die Dichtung umfasst mit Vorteil weichelastischen Kunststoff, insbesondere ist der weichelastische Kunststoff ein Spritzgussmaterial. Die mindestens eine Dichtung kann integral mit der Seitenwand verbunden sein. Dies ist z.B. durch eine Herstellung in einem zwei-Komponenten-Spritzgussverfahren möglich.

Für eine gute Abdichtung bietet es sich an, wenn die die mindestens eine deformierbare Dichtung in Verbindungsrichtung eine Länge L von mindestens A / 2, insbesondere mindestens A aufweist. Beim Wirkverbinden zweier baugleicher Installationsdosen wird dadurch erzielt, dass die beiden Dichtungen sich beim Wirkverbinden gegenseitig nicht nur kontaktieren, sondern auch komprimieren, sodass eine verbesserte Abdichtung erzielt wird. Beim Komprimieren wird die Dichtung hierbei in ihre jeweilige Breite deformiert. Im komprimierten Zustand liegen dann beide Dichtungen aneinander an und erstrecken sich gemeinsam über den Zwischenraum (in Verbindungsrichtung), respektive weisen eine gemeinsame Länge L = A auf. Durch eine (minimale) Länge der Dichtung von L = A wird eine Abdichtung selbst dann ermöglicht, wenn die wirkverbindbare weitere Installationsdose keine Dichtung aufweist.

Der heraustrennbare Wandbereich kann mehrere separat oder gemeinsame heraustrennbare Sektionen umfassen. Je nach Anwendung können die mehreren Sektionen in axialer Richtung hintereinander angeordnet sein. Je eine heraustrennbare Sektion kann zumindest bereichsweise von der Dichtung umgeben sein. Alternativ oder ergänzend kann die Dichtung ebenfalls mehrere Sektionen gemeinsam zumindest bereichsweise umgeben. Pro Sektion kann mindestens ein Paar Rastelemente vorhanden sein. D.h. es sind pro Sektion in Bezug auf diese Sektion gegenüberliegende erste und zweite Rastelemente vorhanden.

Je nach Anwendung können in axialer Richtung mindestens zwei Sektionen hintereinander angeordnet sein (eine vorderseitige Sektion und eine rückseitige Sektion und optional mindestens eine mittlere Sektion). Die vorderseitige Sektion kann hierbei an die Installationsöffnung angrenzen. An der vorderseitigen Sektion kann an einer Innenseite, welche zum Installationsraum hinweist, Befestigungselemente angeordnet sein. Mit Vorteil sind die Befestigungselemente an die jeweilige vorderseitige Sektion angeformt. Die Befestigungselemente dienen zum Befestigen einer Elektroinstallation in der Installationsdose. Durch das Heraustrennen der vorderseitigen Sektionen können die Befestigungselemente mit entfernt werden. Weiterhin kann in einer oder in mehreren Sektionen, insbesondere in der rückseitigen und/oder (wenn vorhanden) der mittleren Sektion, je eine Rohreinführung angeordnet sein. Die jeweilige Rohreinführung kann durch eine heraustrennbare oder durchstechbare weichelastische Membran verschlossen sein.

Je nach Anwendung kann die röhrenförmige Seitenwand aus der axialen Richtung betrachtet mindestens eine nach aussen gewölbte Tasche ausbilden. Die Tasche kann aus der axialen Richtung betrachtet über eine Innenkontur der Installationsöffnung nach aussen hervorragen. In der mindestens einen Tasche ist mit Vorteil je mindestens eine Einführöffnung zum Einführen von Installationsleitungen und/oder Installationsrohren angeordnet. Die Tasche ermöglicht das einfache Montieren von Installationsrohren und/oder Installationskabeln an der Installationsdose. Mit Vorteil ist die mindestens eine Tasche in der Umfangsrichtung der Seitenwand zwischen neben dem mindestens einen heraustrennbaren Wandbereich angeordnet. Wenn zwei heraustrennbare Wandbereiche vorhanden sind, kann in Umfangsrichtung zwischen den beiden heraustrennbaren Wandbereichen je eine Tasche angeordnet sein.

Je nach Ausgestaltung kann die Installationsdose von der Seitenwand seitlich abragende Verankerungselemente aufweisen kann. Die Verankerungselemente dienen dazu die Installationsdose in einer Wandvertiefung einer Wand zu verankern. Alternativ oder in Ergänzung kann die Installationsdose seitlich abragende Auflageelemente aufweisen. Die Auflageelemente dienen dazu an einer die Wandvertiefung umgebene Wandoberfläche (mit einer von der Installationsöffnung wegweisenden Rückseite) aufzuliegen. Dies erlaubt eine Begrenzung einer Einstecktiefe der Installationsdose in die Wandvertiefung. Vorteilhafterweise erstrecken sich die Verankerungselemente und/oder die Auflageelemente im Wesentlichen senkrecht zur Verbindungsrichtung. Auch diese Anordnung ist insbesondere von Vorteil bei der Herstellung der Installationsdose durch Spritzguss.

Anhand der in den nachfolgenden Figuren gezeigten Ausführungsbeispiele und der dazugehörigen Beschreibung werden Aspekte der Erfindung näher erläutert. Es zeigen:
- Fig. 1: Eine Installationsdose gemäss der Erfindung in einer perspektivischen Ansicht;
- Fig. 2: Die Installationsdose gemäss Fig. 1 in einer Ansicht von der Seite;
- Fig. 3: Die Installationsdose gemäss Fig. 1 wirkverbunden mit einer weiteren Installationsdose gemäss Fig. 1 in einer perspektivischen Ansicht;
- Fig. 4: Die Installationsdosen gemäss Fig. 3 in einer geschnittenen Ansicht von unten mit einer Detailansicht auf die heraustrennbaren Wandbereiche und die jeweiligen wirkverbundenen Raststrukturen;
- Fig. 5: Eine erste schematische Darstellung der Abstände zweier wirkverbundenen Installationsdosen;
- Fig. 6: Eine zweite schematische Darstellung der Abstände zweier wirkverbundenen Installationsdosen.

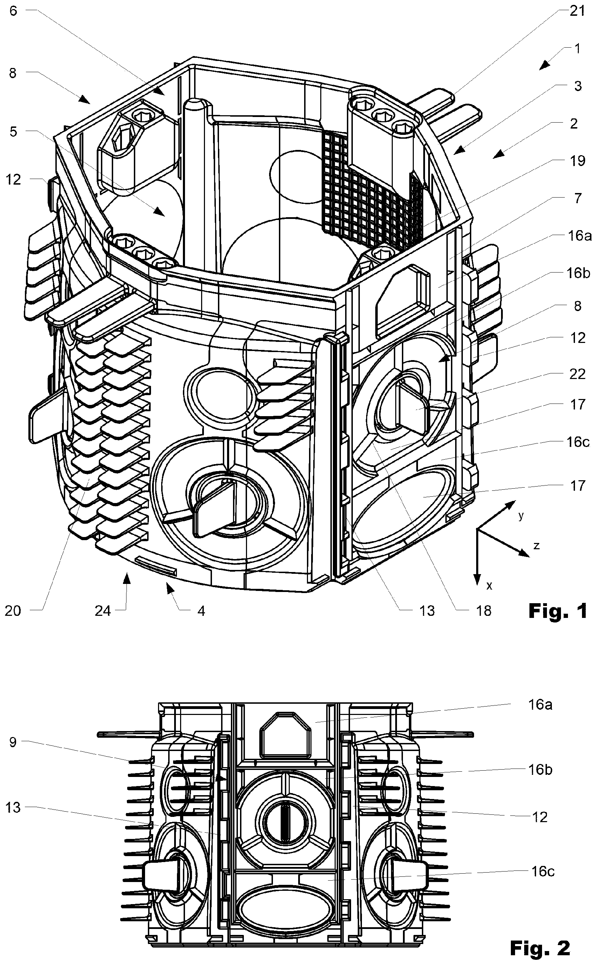

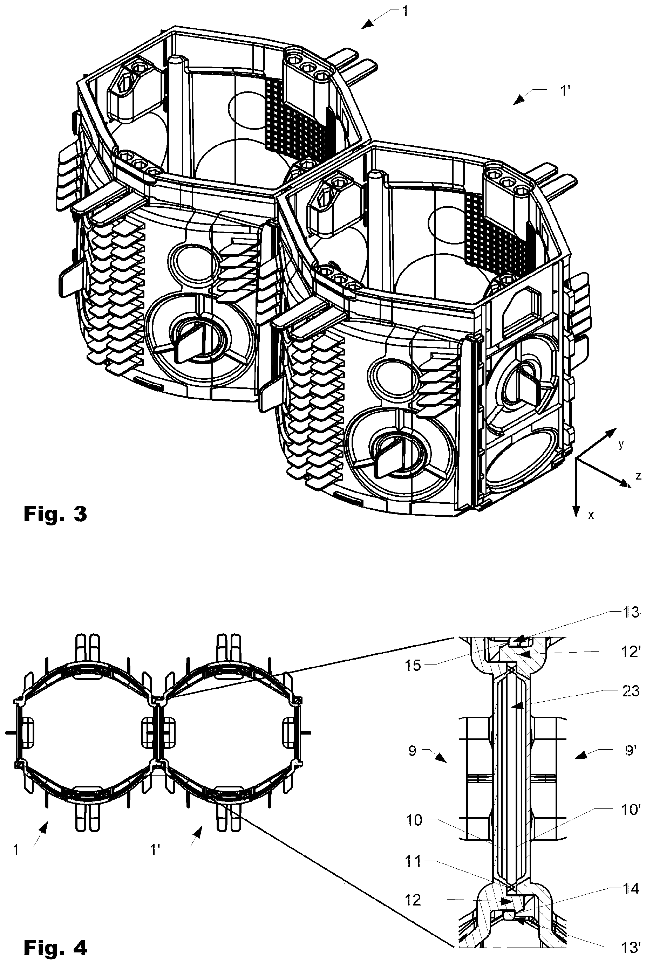

**Figur 1** zeigt eine erste Variante einer Installationsdose 1 gemäss der Erfindung in einer perspektivischen Ansicht, während **Figur 2** diese Installationsdose 1 in einer Ansicht von der Seite darstellt. **Figur 3** zeigt eine Installationsdose 1 gemäss **Figur 1** mit einer wirkverbindbaren (baugleichen) weiteren Installationsdose 1'. **Figur 4** zeigt die Installationsdosen 1, 1' gemäss **Figur 3** in einer geschnittenen Ansicht von unten mit einer Detailansicht auf die heraustrennbaren Wandbereiche 8, 8' und die jeweiligen wirkverbundenen Raststrukturen 9, 9'.

Die Installationsdose 1 gemäss der Erfindung dient für elektrotechnische Installationen. Die Installationsdose 1 umfasst hierbei eine sich in eine axiale Richtung (x-Richtung) von einem vorderseitigen Ende 3 zu einem rückseitigen Ende 4 erstreckende röhrenförmige Seitenwand 2. Die röhrenförmigen Seitenwand 2 umgibt einen Installationsraum 5. Dieser ist über eine vorderseitige, von der röhrenförmigen Seitenwand 2 berandete, Installationsöffnung 6 zugänglich. In der röhrenförmigen Seitenwand 2 kann mindestens ein entlang einer definierten Kontur 7 heraustrennbarer Wandbereich 8 angeordnet sein. Im vorliegenden Fall sind zwei in Bezug zu einer Mittelachse der röhrenförmigen Seitenwand 2 gegenüberliegende heraustrennbare Wandbereiche 8, 8 vorhanden. An einer Aussenseite der röhrenförmigen Seitenwand 2 ist weiter pro Wandbereich 8 eine Raststruktur 9 angeordnet. Die Raststruktur 9 dient zum Wirkverbinden einer Gegenraststruktur 9' einer weiteren Installationsdose 1' aus einer Verbindungsrichtung (vgl. z. B. **Figur 4****).** Mit Vorteil ist die Verbindungsrichtung (z-Richtung) einer jeweiligen Raststruktur 9 senkrecht zur axialen Richtung (x-Richtung) angeordnet, wie in **Figur 1** für die sichtbare frontseitige Raststruktur 9 dargestellt. Die Raststruktur 9 ist hierbei derart ausgestaltet, dass der heraustrennbare Wandbereich 8 in einem wirkverbundenen Zustand der Raststruktur 9 mit der Gegenraststruktur 9' der weiteren Installationsdose 1' heraustrennbar ist. Hierzu ragt die Raststruktur 9 in die Verbindungsrichtung von der Seitenwand 2 erkennbar ab.

In dem gezeigten Beispiel umfasst die Raststruktur 9 ein erstes und ein zweites Rastelement 12, 13, welches je eine Rastschulter 14, 15 aufweist. Für eine leichte Aneinanderreihung baugleicher Installationsdosen, kann die Raststruktur 9 mindestens ein Paar Rastelemente (pro heraustrennbaren Wandbereich 8) mit einem ersten und einem zweiten Rastelement 12, 13 umfassen. Das Paar Rastelemente 12, 13 ist vorzugsweise in eine Umfangsrichtung der Installationsdose 1 in Bezug zu einem jeweiligen heraustrennbaren Wandbereich 8 gegenüberliegend voneinander angeordnet. Das erste Rastelement 12 ist hierbei dazu ausgelegt mit einem zweiten Rastelement 13' der Gegenraststruktur 9' der weiteren Installationsdose 1' wirkverbunden zu werden, welches baugleich zum zweiten Rastelement 13 ist, während das zweite Rastelement 13 dazu ausgelegt ist mit einem ersten Rastelement 12' der Gegenraststruktur 9' der weiteren Installationsdose 1' wirkverbunden zu werden, welches baugleich zum ersten Rastelement 12 ist.

Zumindest bereichsweise um den jeweiligen heraustrennbaren Wandbereich 8 kann eine deformierbare Dichtung 11 angeordnet sein. Diese ist dazu ausgelegt beim Wirkverbinden der Raststruktur 9 mit der Gegenraststruktur 9' der weiteren Installationsdose 1' in die Verbindungsrichtung komprimiert zu werden und so die Installationsdose 1 gegen die weitere wirkverbundene Installationsdose 1' abzudichten.

Wie in **Figur 2** gut erkennbar ist, kann der heraustrennbare Wandbereich 8 weiter mehrere separat oder gemeinsame heraustrennbare Sektionen 16 umfassen. Im vorliegenden Beispiel sind drei Sektionen 16a, 16b, 16c vorhanden. Die drei Sektionen 16a, 16b, 16c sind in axialer Richtung hintereinander angeordnet. Die jeweiligen Sektionen sind jeweils und/oder gemeinsam zumindest bereichsweise von der Dichtung 11 umgeben. Pro Sektion 16a, 16b, 16c ist mit Vorteil mindestens ein Paar Rastelemente 12, 13 vorhanden, wobei sich das erste und das zweite Rastelement des Paars von Rastelemente in Bezug auf die Sektion 16a, 16b, 16c gegenüberliegen. In einer oder in mehreren Sektionen 16a, 16b, 16c kann je eine Rohreinführung angeordnet sein, welche durch eine heraustrennbare Membran 17 verschlossen ist. Im vorliegenden Beispiel weist die mittlere und rückseitige Sektion 16b, 16c eine heraustrennbare Membran 17 auf. Die Membran 17 der mittleren Sektion 16b weist hierbei verschiedene Zonen zum jeweiligen Einführen einer Leitung auf. Die Zonen sind von Stegen 18 voneinander getrennt. Zum Heraustrennen der gesamten Membran 17 weist die Membran 17 zusätzlich eine Greifflasche 22 auf, welche mit den jeweiligen die Zonen abtrennenden Stegen 18 über einen ringförmigen zentralen Steg wirkverbunden ist. An der vorderseitigen Sektion16a kann an einer Innenseite, welche zum Installationsraum 5 hinzeigt, Befestigungselemente 19 angeformt sein.

**Figur 3** und **Figur 4** zeigt die erfindungsgemässe Installationsdose 1 wirkverbunden mit einer weiteren Installationsdose 1'. Erkennbar ist, dass die Wirkverbindung möglich ist, ohne dass die heraustrennbaren Wandbereiche 8, 8' herausgetrennt sind. Das Heraustrennen der Wandbereiche kann in einem nachgelagerten Montageschritt (nicht dargestellt) durchgeführt werden. Wie in **Figur 4** ersichtlich, liegen in dem wirkverbundenen Zustand die jeweiligen Dichtungen 11, 11' der (ersten) Installationsdose 1 und der weiteren (zweiten) Installationsdose 1' aneinander an. Die entsprechenden Dichtungen 11, 11' komprimieren sich gegenseitig und dichten die heraustrennbaren Wandbereiche 8, 8' ab. Zwischen den jeweiligen Aussenseiten 10, 10' bildet sich ferner ein Zwischenraum 23 aus. In der Detailansicht erkennbar ist, wie die ersten Rastelemente 12 der (ersten) Installationsdose 1 mit den zweiten Rastelementen 12' der weiteren (zweiten) Installationsdose 1' im Eingriff sind. Entsprechend sind die zweiten Rastelemente 13 der (ersten) Installationsdose 1 mit den ersten Rastelementen 12' der weiteren (zweiten) Installationsdose 1' im Eingriff. Die jeweiligen ersten Rastelemente 12, 12' der (ersten) und der weiteren (zweiten) Installationsdose 1, 1' sowie die jeweiligen zweiten Rastelement 13, 13' der (ersten) und der weiteren (zweiten) Installationsdose 1, 1' sind baugleich. Die ersten Rastelemente 12 umfassen hierbei je einen Rasthaken mit einer ersten Rastschulter 14, welche dazu ausgelegt ist hinter einer zweiten Rastschulter 15' einer der zweiten Rastelemente 13' zu verrasten. Im gezeigten Fall sind die jeweiligen zweiten Rastelemente 13, 13' brückenartig ausgebildet. Andere Ausgestaltungen sind jedoch ebenfalls möglich. Die zweite Rastschulter 15 ist hierbei je an einer zur Seitenwand 2 hingewandten Unterseite der brückenartigen zweiten Rastelemente 13 angeordnet. Wie in **Figur 4** ersichtlich, kann ebenfalls das mindestens eine erste Rastelement 12 der Installationsdose 1 in eine erste Richtung, welche senkrecht zur axialen Richtung (x) und senkrecht zur Verbindungsrichtung (z) angeordnet ist, hinterschnittsfrei ausgestaltet sein. Das mindestens eine zweite Rastelement 13 der Installationsdose 1 kann in eine zur ersten Richtung entgegengesetzt angeordnete zweite Richtung hinterschnittsfrei ausgestaltet sein. Diese Anordnung ist insbesondere von Vorteil bei der Herstellung der Installationsdose durch Spritzguss.

Ebenfalls gut in **Figur 1** zu sehen ist, dass die Installationsdose 1 (als auch die weitere Installationsdose 1') von der Seitenwand 2 seitlich abragende Verankerungselemente 20 aufweisen kann. Weiterhin kann die Installationsdose 1 ebenfalls seitlich abragende Auflageelemente 21 aufweisen. Wie ersichtlich, erstrecken sich die Verankerungselemente 20 als auch die Auflageelemente 21 im Wesentlichen senkrecht zur Verbindungsrichtung.

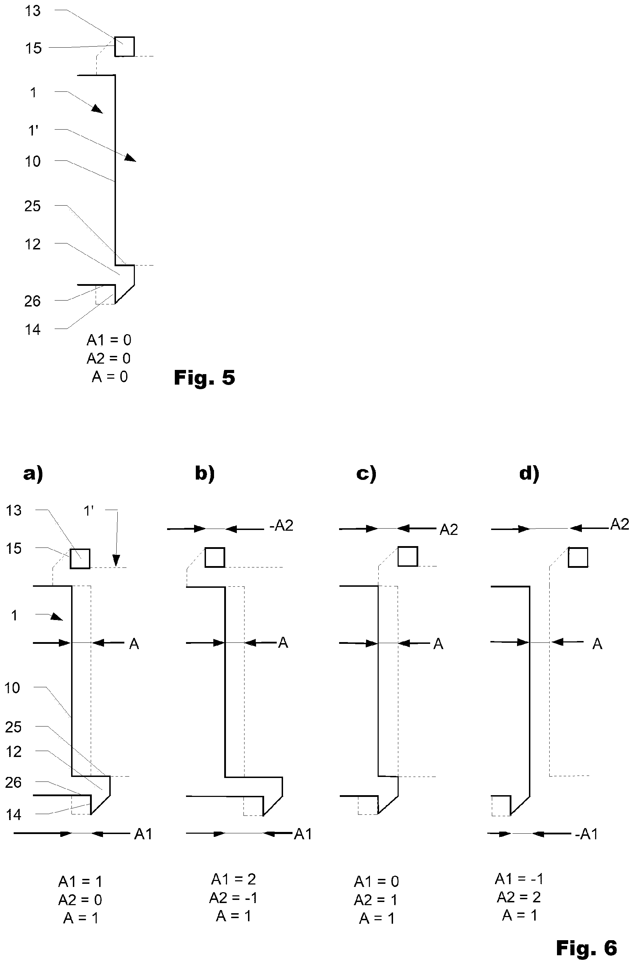

In **Figur 5** und **Figur 6** stellen schematisch die Abstände zweier wirkverbundenen Installationsdosen 1, 1' dar. Eine erste Rastschulter 14 des ersten Rastelementes 12 in Form eines Rasthakens ist hierbei mit einem ersten Abstand A1 in die Verbindungsrichtung zu der Aussenseite 10 des heraustrennbaren Wandbereichs angeordnet und die zweite Rastschulter 13 mit einem zweiten Abstand A2 in Verbindungsrichtung zu der Aussenseite 10 des heraustrennbaren Wandbereichs angeordnet. Wie zuvor beschrieben, ist vorteilhafterweise die Summe A des ersten Abstandes A1 und des zweiten Abstandes A2 grösser als null.

**Figur 5** zeigt hierbei einen Grenzfall, wo sowohl A1 als auch A2 null sind. In diesem Fall liegen die jeweiligen Rastschultern 14,15 in einer Ebene der Aussenseite 10 des heraustrennbaren Wandbereichs. Es liegt also eine unvorteilhafte Doppelpassung vor. **Figur 6 a)** - **d)** legen beispielhafte Variationen der Rastelemente 12, 13 dar, bei denen der Abstand A grösser null ist. In **Figur 6a****)** ist die zweite Rastschulter 15 in der Ebene der Aussenseite 10 des heraustrennbaren Wandbereiches angeordnet. Folglich ist A2 null. Da jedoch A1 einen exemplarischen Wert von 1 (> 0) aufweist, ist die Summe A = 1 (> 0). **Figur 6b)** und **6d****)** zeigen Beispiele, bei denen entweder der Abstand A1 oder der Abstand A2 negativ ist. D.h. diese unterhalb der Aussenseite 10 des heraustrennbaren Wandbereichs 8 und näher zur Mittelachse der Installationsdose 1 hin angeordnet sind. In **Figur 6b)** weist A1 einen exemplarischen Wert von 2 auf und A2 einen exemplarischen Wert von -1, und **Figur 6d****)** eine Variante, bei der der Abstand A1 negativ ist. **Figur 6c)** zeigt hingegen eine Variante, wo der Abstand A1 null ist. Erkennbar ist jedoch, dass bei den Varianten mit A1 kleiner oder gleich null **(****Figur 6c)** und **Figur 6d****)**) keine seitliche Führung und Abdichtung der Rastelemente 12, 13 zueinander mehr vorliegt. Bei den Varianten gemäss **Figur 6a)** und **6b**) weist der Rasthaken 12 hingegen erkennbar eine distale Auflagefläche 25 zur Auflage an einer röhrenförmigen Seitenwand 2' einer weiteren wirkverbindbaren Installationsdose 1' auf. Die distale Auflagefläche 26 ist hierbei mit Vorzug in Verbindungsrichtung zumindest bereichsweise hinter der ersten Rastschulter 12 angeordnet. Weiterhin kann die distale Auflagefläche 25 zum heraustrennbaren

Wandbereich 8 hingewandt am ersten Rastelement 12 angeordnet sein. Weiter weist der Rasthaken 12 in allen Varianten eine proximale Auflagefläche 26 zur Auflage an einem zweiten Rastelement 13' einer weiteren wirkverbindbaren Installationsdose 1' auf. Die proximale Auflagefläche 26 kann hierbei in Verbindungsrichtung zumindest bereichsweise vor der ersten Rastschulter 14 angeordnet sein. Die proximale Auflagefläche 26 kann weiterhin vom heraustrennbaren Wandbereich 8 weggewandt am ersten Rastelement 12 angeordnet sein.

### LISTE DER BEZUGSZEICHEN

| | | | |
|---|---|---|---|
| 1 | Installationsdose | 14 | Erste Rastschulter |
| 2 | Seitenwand | 15 | Zweite Rastschulter |
| 3 | Vorderseitiges Ende | 16 | Sektion |
| 4 | Rückseitiges Ende | 17 | Membran |
| 5 | Installationsraum | 18 | Steg |
| 6 | Installationsöffnung | 19 | Befestigungselement |
| 7 | Kontur | 20 | Verankerungselement |
| 8 | Wandbereich | 21 | Auflageelement |
| 9 | Raststruktur | 22 | Greiflasche |
| 10 | Aussenseite | 23 | Zwischenraum |
| 11 | Dichtung | 24 | Montageöffnung |
| 12 | Erstes Rastelement | 25 | Distale Auflagefläche |
| 13 | Zweites Rastelement | 26 | Proximale Auflagefläche |

## Patentansprüche

1. Installationsdose (1) für elektrotechnische Installationen, die Installationsdose (1) umfassend
a. eine sich in eine axiale Richtung (x) erstreckende röhrenförmige Seitenwand (2), welche einen Installationsraum (5) umgibt, der über eine vorderseitige, von der röhrenförmigen Seitenwand (2) berandete Installationsöffnung (6) zugänglich ist;
b. mindestens einen in der röhrenförmigen Seitenwand (2) angeordneten und entlang einer definierten Kontur (7) heraustrennbaren Wandbereich (8);
c. eine Raststruktur (9) zum Wirkverbinden mit einer Gegenraststruktur (9) einer weiteren Installationsdose (1') in eine Verbindungsrichtung, welche im Wesentlichen senkrecht zur axialen Richtung (x) angeordnet ist und von einer Mittelachse der Installationsdose (1) wegweist, wobei die Raststruktur (9)
i. ein erstes Rastelement (12) mit einer ersten Rastschulter (14) umfasst, welche mit einem ersten Abstand A1 in die Verbindungsrichtung zu einer Aussenseite (10) des heraustrennbaren Wandbereichs (8) angeordnet ist;
ii. ein zweites Rastelement (13) mit einer zweiten Rastschulter (15) umfasst, welche mit einem zweiten Abstand A2 in Verbindungsrichtung zu der Aussenseite (10) des heraustrennbaren Wandbereichs (8) angeordnet ist; und
iii. eine Summe A des ersten Abstandes A1 und des zweiten Abstandes A2 grösser als null ist.

2. Installationsdose (1) gemäss Anspruch 1, **dadurch gekennzeichnet, dass** auf der Aussenseite der röhrenförmigen Seitenwand (2) und in Umfangsrichtung der Installationsdose (1) zwischen dem ersten und dem zweiten Rastelement mindestens eine deformierbare Dichtung (11) angebracht ist.

3. Installationsdose (1) gemäss Anspruch 2, **dadurch gekennzeichnet, dass** die mindestens eine deformierbare Dichtung (11) in Verbindungsrichtung eine Länge L von mindestens A / 2 aufweist.

4. Installationsdose (1) gemäss einem der vorangehenden Ansprüche, **dadurch gekennzeichnet, dass** der heraustrennbare Wandbereich (8) in einem wirkverbundenen Zustand der Raststruktur (9) mit der Gegenraststruktur (9') der weiteren Installationsdose (1') heraustrennbar ist.

5. Installationsdose (1) gemäss einem der vorangehenden Ansprüche, **dadurch gekennzeichnet, dass** das erste und/oder das zweite Rastelement (12, 13) in eine Richtung senkrecht zur Verbindungsrichtung elastisch deformierbar sind.

6. Installationsdose (1) gemäss einem der vorangehenden Ansprüche, **dadurch gekennzeichnet, dass** das erste Rastelement (12) eine distale Auflagefläche (25) zur Auflage an einer röhrenförmigen Seitenwand (2') einer weiteren wirkverbindbaren Installationsdose (1') aufweist.

7. Installationsdose (1) gemäss Anspruch 6, **dadurch gekennzeichnet, dass** die distale Auflagefläche (25) in Verbindungsrichtung zumindest bereichsweise hinter der ersten Rastschulter (14) angeordnet ist.

8. Installationsdose (1) gemäss einem der vorangehenden Ansprüche, **dadurch gekennzeichnet, dass** das erste Rastelement (12) eine proximale Auflagefläche (26) zur Auflage an einem zweiten Rastelement (13') einer weiteren wirkverbindbaren Installationsdose (1') aufweist.

9. Installationsdose (1) gemäss Anspruch 8, **dadurch gekennzeichnet, dass** die proximale Auflagefläche (26) in Verbindungsrichtung zumindest bereichsweise vor der ersten Rastschulter (14) angeordnet ist.

10. Installationsdose (1) gemäss einem der vorangehenden Ansprüche, **dadurch gekennzeichnet, dass** der heraustrennbare Wandbereich (8) mehrere separat oder gemeinsame heraustrennbare Sektionen (16a, 16b 16c) umfasst.

11. Installationsdose (1) gemäss Anspruch 10, **dadurch gekennzeichnet, dass** die mehreren Sektionen (16a, 16b, 16c) in axialer Richtung hintereinander angeordnet sind.

12. Installationsdose (1) gemäss Anspruch 10 oder 11, **dadurch gekennzeichnet, dass** in axialer Richtung pro Sektion (16a, 16b, 16c) mindestens ein Paar sich in Bezug auf die Sektion (16a, 16b, 16c) gegenüberliegende erste und zweite Rastelemente (12, 13) vorhanden sind.

13. Installationsdose (1) gemäss Anspruch 11 oder 12, **dadurch gekennzeichnet, dass** an einer vorderseitigen Sektion (16a) der mehreren Sektionen (16a, 16b, 16c) Befestigungselemente (19) zum Befestigen einer Elektroinstallation in der Installationsdose (1) angeformt sind.

14. Installationsdose (1) gemäss einem der Ansprüche 10 bis 13, **dadurch gekennzeichnet, dass** in einer oder in mehreren Sektionen (16a, 16b, 16c) eine Rohreinführung angeordnet ist, welche durch eine heraustrennbare Membran (17) verschlossen ist.

15. Installationsdose (1) gemäss einem der vorangehenden Ansprüche, **dadurch gekennzeichnet, dass** das erste Rastelement (12) in eine erste Richtung (-y), welche senkrecht zur axialen Richtung (x) und senkrecht zur Verbindungsrichtung (z) angeordnet ist, hinterschnittsfrei ausgestaltet ist und das mindestens eine zweite Rastelement (13) in eine zur ersten Richtung (-y) entgegengesetzt angeordneten zweiten Richtung (y) hinterschnittsfrei ausgestaltet ist.

16. Installationsdose (1) gemäss Anspruch 6 oder 8, **dadurch gekennzeichnet, dass** die proximale und/oder distale Auflagefläche (26, 25) senkrecht zur Aussenseite (10) des heraustrennbaren Wandbereichs ausgerichtet sind.

17. Installationsdose (1) gemäss einem der vorangehenden Ansprüche, **dadurch gekennzeichnet, dass** das erste und das zweite Rastelement (12, 13) in eine Umfangsrichtung der Installationsdose (1) in Bezug zum heraustrennbaren Wandbereich (8) gegenüberliegend voneinander angeordnet sind.

18. Installationsdose (1) gemäss einem der vorangehenden Ansprüche, **dadurch gekennzeichnet, dass** der Abstand A1 grösser null ist.
